# EUROPEAN PATENT SPECIFICATION

(11) **EP 2 265 447 B1**
(45) Date of publication and mention of the grant of the patent: **28.09.2011**
(21) Application number: 09722903.3
(22) Date of filing: 16.03.2009
(51) Int. Cl.: B60B 27/00

(54) **METHOD FOR PRODUCING VEHICLE WHEEL HUBS AND WHEEL HUBS MADE USING THIS METHOD**
VERFAHREN ZUR HERSTELLUNG VON FAHRZEUGRADNABEN UND AUF DIESE WEISE HERGESTELLTE RADNABEN
PROCÉDÉ POUR PRODUIRE DES MOYEUX DE ROUE DE VÉHICULE ET MOYEUX DE ROUE FABRIQUÉS À L'AIDE DE CE PROCÉDÉ

(30) Priority: 17.03.2008 IT BO20080171
(43) Date of publication of application: 29.12.2010
(73) Proprietor: MINGANTI INTERNATIONAL LIMITED, Dublin 2 (IE)
(72) Inventor: CALDANA, Marcus, S- 53157 Lidköping (SE)
(74) Representative: Porsia, Dino
(86) International application number: PCT/EP2009/053097
(87) International publication number: WO 2009/115499

(56) References cited:
- EP-A- 0 927 651
- DE-A1-102005 022 082
- JP-A- 2001 001 710

## Description

The invention relates to vehicle wheel hubs, namely to those case-like structures with bearings which support the wheel and the brake disc and which are designed to be constrained in a fixed or articulated manner to the rear axle unit or the front axle unit of a motor vehicle.

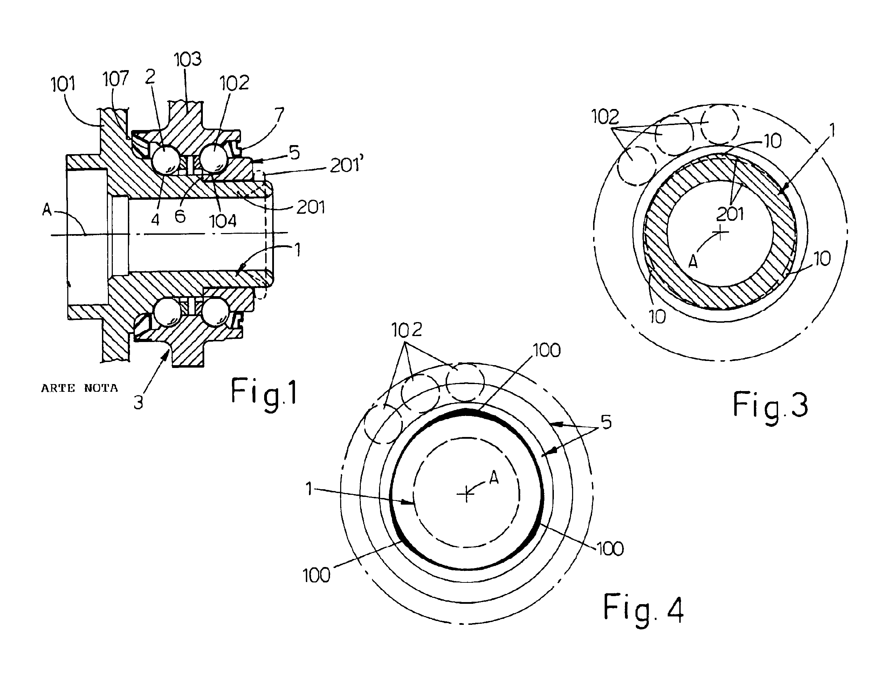

In particular, the invention relates to the wheel hubs of the type shown in Figure 1 of the accompanying set of drawings, provided with a spindle 1 which supports integrally at one end a perpendicular flange 101 and which, via two interposed crown parts 2, 102 of revolving bodies consisting, for example, of spheres or other equivalent means such as, for example, cylindrical or conical needle rollers, cooperates with the possibility of a relative rotational movement, about the common axis A, with an outer crown part 3 usually provided with support lugs 103 connected for example to the front axle unit or rear axle unit of the motor vehicle, while the said flange 101 is designed in any suitable way to support the brake disc and rim of the wheel. The scope of the invention also includes wheel hubs similar or equivalent to that shown in Figure 1 and used also in a different manner, for example for connection by means of the spindle 1 to the supporting parts and for connection to the wheel and to the brake disc by means of the bush 3.

In the wheel hub in question the crown part of the rolling means 2 travels along an annular track 4 formed directly on the outer side surface of the spindle 1, while the other crown part of rolling means 102 travels along an annular track 104 formed on a ring 5 which is mounted on an externally tapered portion 201 of the spindle 1 and is firmly fixed onto the latter by means of abutment against an inner shoulder 6 and against an outer edge 201' formed, during a step following said mounting operation, by means of rolling of the section, projecting from the ring 5, of the said support portion 201 of the spindle.

The space inside which the crown parts of the rolling means 2, 102 operate is filled with lubricant and is closed by known sealing means 7, 107.

Practical experience has shown that the force exerted by the annular rolled edge 201' on the inner ring 5 of the bearing is more than sufficient to lock axially this ring on the associated support part, but instead is not able to prevent any accidental relative rotation of the ring 5 and spindle 1, in particular when considerable friction is present between this ring and the associated crown part of rolling means 102. This condition may cause vibrations and noise, may reduce the average working life of the bearing and, if neglected, may result in overheating and breakage of the tapered support portion 201, 201' of the spindle 1 which may freely disengage from the casing 3, with the consequences which may be imagined.

In order to overcome this serious drawback, the known art teaches that it is possible to mount the ring 5 on the spindle 1 using keying means arranged in between and consisting for example of splined male and female profiles which are formed longitudinally on the outer surface of the spindle and on the inner surface of the ring 5 and which may thus be engaged without any possibility of relative rotation and the axial movements of which are also prevented by means of rolling of the edge 201'. This solution is, for example, illustrated in the US patent application 2002/0025093 published on 28/2/2002 entitled "Bearing device for drive wheel".

This same solution, however, has the drawback of a high production cost in that the formation of the said keying grooves requires specific machining techniques with setting of the workpieces on machine tools different from turning machine tools.

Still with the aim of overcoming the serious drawback mentioned above, also known is the solution (described in the patent US 7,241,054) which can be produced on an industrial scale at a very low cost, during the same operation of turning the workpieces and which envisages the formation, on the side surface for engagement between ring 5 and spindle 1, of sections with a radially multiple-lobe form, for example a three-lobe form.

Although, this solution, on the on hand, offers the advantage compared to the previous solution of being able to be produced with very low costs, on the other hand it results in difficulties during engagement between the parts 5 and 1, owing to the need to correctly align these same parts relative to each other, both in the axial direction and in the angular direction, even before they are axially engaged together.

The closest prior art document EP 0 927 651 A2 discloses a vehicle wheel bearing-hub unit of the type comprising a dual ring of balls, in which the radially inner and axially outer race is formed in a separate annular component inserted on the hub, where the annular component is axially engaged on the hub by means of an annular end portion of the hub which is folded by means of cold forming. The surface of the annular component presents radial roughness means such that in performing the cold forming, the folded portion is deformed by the roughness means and reproduces the shape thereof, whereby the annular component is secured for rotation with the hub.

The object of the invention is to solve this technical problem of engagement, in particular to simplify this engagement operation and simplify the formation of the keying means, with a method as described in Claim 1 and in the subsequent dependent claims, based on the following proposed solution: the machining operation for the three-lobe engaged arrangement is performed so as to involve all or only partly the shoulder 6 and the corresponding inner end of the ring 5, so that the latter may be mounted on the portion 201 of the spindle 1 as though these two parts were two normal parts with a round cross-section and therefore without any need for relative angular alignment and, only after these two parts have been engaged together axially, is a relative rotation of the said parts performed in order to engage correctly the three-lobe profile of the ring 5 with the corresponding three-lobe profile of the shoulder 6 of the spindle and vice versa and, after this step involving correct angular alignment, the said axial locking edge 201' will be formed by means of rolling.

Further characteristic features of the invention and the advantages arising therefrom will emerge more clearly from the following description of a preferred embodiment thereof illustrated purely by way of a non-limiting example in the figures of the two accompanying sheets of drawings in which, in addition to the already considered Figure 1 relating to the prior art:
- Fig. 2 shows a wheel hub of the same type as that shown in Figure 1, but improved according to the invention;
- Figs. 3 and 4 show corresponding details of the three-lobe profile of the spindle and the ring, respectively, both viewed along the cross-sectional line X-X of Figure 2;
- Fig. 5 shows, axially cross-sectioned, another type of wheel hub with the inner rings of the bearings both mounted on the spindle and keyed with the latter using the same method according to the invention.

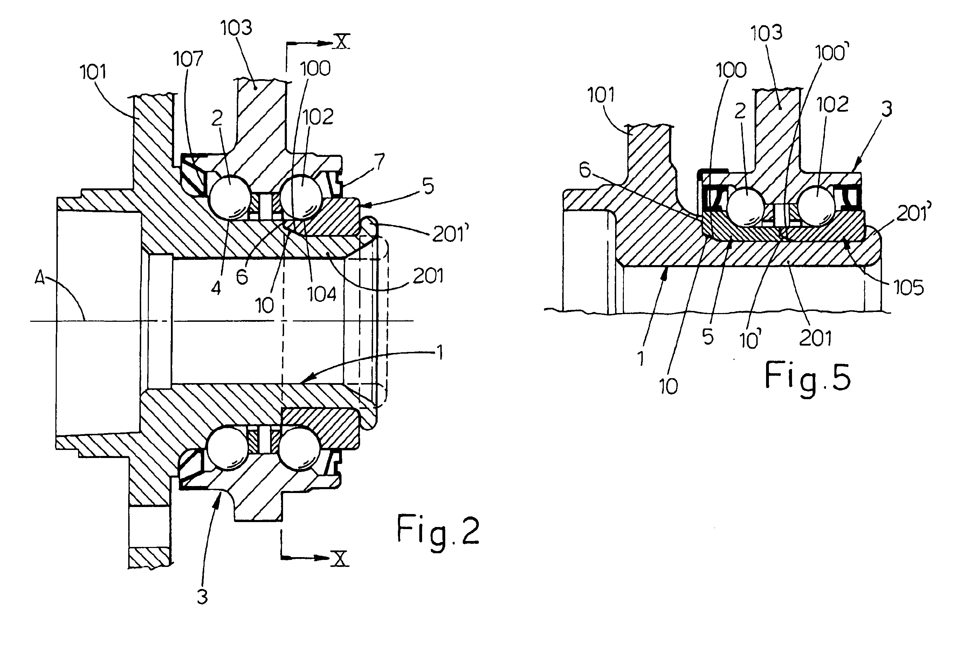

In the wheel hub shown in Figure 2, components identical to those of the wheel hub shown in Figure 1 are indicated by the same numbers, so that a description of these identical components is omitted.

According to the invention, when the spindle 1 is machined on the turning machine, the angle zone of its shoulder 6 is provided with a multiple-lobe machined zone, for example having a three-lobe profile as shown in Figure 3, with lobes 10 raised outwards relative to the outer side surface of the externally cylindrical portion 201, with a round cross-section, of the spindle. These reliefs 10 may occupy, as mentioned, the angle zone of the shoulder 6 and/or may occupy the front surface of the latter only partly or over its entire extension.

Likewise, during machining of the ring 5 on the turning machine, its edge and/or its front face intended to co-operate with the said shoulder 6 of the spindle 1 is provided with three-lobe recesses 100, as can be seen from Figure 4, complementing the aforementioned reliefs 10.

The result of the above is that the inner side surface of the ring 5 remains over its length, except for the small end part which may be occupied by the said three-lobe profile 100, perfectly cylindrical and with a round cross-section, similar to the entire length of the outer side surface of the portion 201 of the spindle, so that mounting of the ring 5 on this part 201 of the spindle is an extremely easy operation since the two parts must not be necessarily aligned with each other angularly before axial engagement. The recessed three-lobe profile 100 provided on the inner edge of the ring 5 forms, moreover, an effective guide means which facilitates correct axial engagement of the parts, even if these are not perfectly aligned axially.

Only subsequently, once the ring 5 has been mounted on the portion 201 of the spindle, will a small relative rotation of the two parts be performed and the latter pushed lightly against each other so as to cause the recessed three-lobe profile 100 of the ring 5 to engage with the raised three-lobe profile 10 of the shoulder 6 of the spindle, and this engaged condition may be easily detected with sensors since, when it occurs, the ring 5 touches the shoulder 6 and engages with the portion 201 of the spindle over the appropriate length, without performing any axial displacement on this portion 201.

When engagement of the aforementioned parts 201 and 5 has been performed, before subjecting them to the rolling procedure for formation of the locking edge 201', the ring 5 may if necessary be locked in the correct angular position on the portion 201 of the spindle, with the prior or subsequent application of a few drops of adhesive, in any manner suitable for the purpose.

When the multiple-lobe parts 10 and 100 are engaged together, the same parts will form a small engaging joint partly of the radial type and partly of the frontal type or exclusively of the frontal type, this preventing relative rotation of the ring 5 and spindle 1 and the associated serious problems mentioned in the introductory part of the present description.

It is evident how the method described, in addition to simplifying the operation of keying the ring 5 onto the spindle 1, also simplifies the operation of forming the three-lobe profiles 10 and 100, since the same profiles are situated on a surface covering a small area, decidedly much smaller than that envisaged by the prior art according to the patent US 7,241,054 mentioned in the introduction.

If the wheel hub is of the type shown in Figure 5, with two rings 5 and 105 for the bearings 2 and 102, the inner ring 5 and the shoulder 6 are designed for keying together with a three-lobe engaged arrangement 10, 100, as described with reference to Figures 2, 3 and 4 and, moreover, three-lobe machined zones 10' are provided on the rear edge of the ring 5 and other such zones 100' are provided on the inner edge of the ring 105, in order to perform keying together of the two rings, such that the inner ring 5 is keyed directly onto the spindle 1 and the rear ring 105 is keyed onto the front ring 5 and, therefore, via the latter, also onto the spindle 1.

## Claims

1. Method for producing vehicle wheel hubs provided with at least two crown parts of rolling means (2, 102), at least one of which (102) travels along an annular track (104) which is formed in a ring (5) which is mounted with a high degree of precision on an end portion (201) of the spindle (1) on which the same ring is axially locked by means of abutment, on one side, against a shoulder (6) and, on the other side, against a rolled end edge (201') of the same spindle, **characterized by** the succession of following operating steps:
- forming with the machine tools for turning the spindle (1), on the front surface of the said shoulder (6), a multiple-lobe profile (10), which has parts raised relative to the outer side surface of the spindle portion (201) provided with the same shoulder (6) and on which the said ring (5) must be mounted;
- forming with the machine tools for turning the said ring (5), on the edge and/or on the end of this ring which is intended to co-operate with the said shoulder (6), a machined zone with a multiple-lobe form (100) which complements and is able to mate with the machined zone formed on the said shoulder (6) and which has parts which are recessed relative to the inner side surface of the ring (5) and which may act as guide means during the following step, i.e.:
- axially mounting the ring (5) on the spindle portion (201) which it must support, operating in such a way that the said ring abuts against the said shoulder (6);
- performing a brief relative rotation of the spindle (1) and the ring (5), so as to perform engagement between the said multiple lobe profile (10) and the multiple-lobe form (100) whereupon the ring engages with the spindle occupying the space of appropriate length and ceases to be axially displaced on the said spindle;
- rolling the spindle portion (201) projecting from the said ring (5), for formation of a rolled edge (201') which axially locks the said ring (5) on the support spindle (1).

2. Method according to Claim 1, **characterized in that** it comprises, prior to the said last rolling step, a step where the ring (5) is locked in the correct axial and angular mounting position on the spindle portion (201), resulting in mutual co-operation of the said multiple-lobe profile (10) and the multiple-lobe form (100), for example with the application of adhesive in any part of the contact surfaces of the ring (5) and the spindle (1).

3. Method according to Claim 1, **characterized in that**, for the production of wheel hubs for vehicles, provided with at least two crown parts of rolling means (2, 102) which travel along tracks (4, 104) formed on respective rings (5, 105) mounted with a high degree of precision on an end portion (201) of the spindle on which the said rings are mounted in succession and are locked axially by means of abutment of the inner ring (5) against a shoulder (6) of the said spindle and by means of abutment of the outer ring (105) on one side against the said inner ring (5) and on the other side against a rolled end edge (201') of the said spindle, the inner ring (5) and the shoulder (6) are designed so as to be keyed together with a said multiple-lobe (10, 100) engaged arrangement, while further multiple-lobe machined zones (10'), are provided on the rear edge of the said inner ring (5) and other multiple-lobe machined zones (100'), are provided on the inner edge of the outer ring (105), in order to provide mutual keying between the two rings, so that the inner ring (5) is keyed directly onto the spindle (1) and the outer ring (105) is keyed onto the inner ring (5) and therefore, via the latter, also onto the spindle (1).

4. Vehicle wheel hub provided with at least two crown parts of rolling means (2, 102), at least one of which travels along an annular track (104) formed in a ring (5) which is mounted with a high degree of precision on an end portion (201) of the spindle (1) on which the same ring is axially locked by means of abutment against an inner shoulder (6) of the said spindle and by means of abutment against a rolled end edge (201') of the said spindle, **characterized in that** the said shoulder (6) is machined on machine tools, so as to assume a multiple-lobe form (10), which has parts raised relative to the outer side surface of the spindle portion (201) on which the said ring (5) must be mounted and which mates perfectly with a corresponding multiple-lobe form (100) formed on the edge and/or on the end of the said ring (5) which is intended to rest against the said shoulder (6) so as to simplify the formation of the said lobe keying profiles and simplify mounting of the ring on the spindle, this multiple-lobe profiled form (100) presenting parts which are recessed relative to the inner side surface of the said ring (5), so as to form a guide means which facilitates axial engagement of the said parts (5, 201).

5. Wheel hub according to Claim 4, **characterized in that** if both the crown parts of rolling means (2, 102) travel along the respective tracks (4, 104) of respective rings (5, 105) mounted with a high degree of precision and in succession on an end portion (201) of the spindle on which the said rings are axially locked by means of abutment of the inner ring (5) against a shoulder (6) of the same spindle and by means of abutment of the outer ring (105) on one side against the said inner ring (5) and on the other side against a rolled end edge (201') of the same spindle, the inner ring (5) and the shoulder (6) are designed to be keyed together with a said multiple-lobe engaged arrangement (10, 100), while further multiple-lobe machined zones (10') are provided on the rear edge of the said inner ring (5) and other multiple-lobe machined zones (100') are provided on the inner edge of the outer ring (105), in order to provide mutual keying between the two rings, so that the inner ring (5) is keyed directly onto the spindle (1) and the outer ring (105) is keyed onto the inner ring (5) and therefore, via the latter, also onto the spindle (1).

6. Wheel hub according to any one of the preceding claims, in which the multiple-lobe profile or form is a three-lobe profile or form.

## Patentansprüche

1. Verfahren zum Herstellen von Fahrzeugradnaben, die mit wenigstens zwei Kranzteilen aus Wälzelementen (2,102) versehen sind, von denen wenigstens eines (102) entlang einer ringförmigen Bahn (104) läuft, die an einem Ring (5) ausgebildet ist, der mit einem hohen Grad an Genauigkeit an einem Endbereich (201) der Spindel (1) montiert ist, an welcher der gleiche Ring mittels einer Anlage auf einer Seite an einem Absatz (6) und auf der anderen Seite an einer umgerollten Endkante (201') der gleichen Spindel axial verriegelt ist, **gekennzeichnet durch** die Abfolge der folgenden Arbeitsschritte:
- Ausbilden eines Mehrfachnockenprofiles (10) mit dem Maschinenwerkzeug zum Drehen der Spindel (1) an der Endseite des Absatzes (6), wobei das Mehrfachnockenprofil Teile besitzt, die relativ zu der äußeren Seitenfläche des Spindelbereiches (201), der mit dem gleichen Absatz (6) versehen ist und an welchem der Ring (5) montiert werden muss, erhöht sind;
- Ausbilden eines Bearbeitungsbereiches mit einer Mehrfachnockenform (100) mit dem Maschinenwerkzeug zum Drehen des Ringes (5) an der Kante und / oder an dem Ende dieses Ringes, die bzw. das zum Zusammenwirken mit dem Absatz (6) vorgesehen ist, wobei die Mehrfachnockenform komplementär zu dem an dem Absatz (6) ausgebildeten Bearbeitungsbereich und in der Lage ist, mit diesem zusammenzupassen, und Teile besitzt, die relativ zu der inneren Seitenfläche des Ringes (5) vertieft sind und die während des folgenden Schrittes als Führungsmittel dienen können, d.h.:
- axiales Montieren des Ringes (5) auf dem Spindelbereich (201), der ihn abstützen muss, wobei dies in solcher Weise durchgeführt wird, dass der Ring an dem Absatz (6) anliegt;
- Durchführen einer kurzen relativen Rotation der Spindel (1) und des Ringes (5), um einen Eingriff zwischen dem Mehrfachnockenprofil (10) und der Mehrfachnockenform (100) durchzuführen, woraufhin der Ring mit der Spindel im Eingriff steht und dabei eine geeignete Länge an Raum einnimmt und daran gehindert ist, sich axial auf der Spindel zu verlagern;
- Umrollen des über den Ring (5) überstehenden Spindelbereiches (201) zur Ausbildung einer umgerollten Kante (201'), die den Ring (5) auf der Tragspindel (1) axial verriegelt.

2. Verfahren nach Anspruch 1, **dadurch gekennzeichnet, dass** es vor dem genannten letzten Umrollschritt einen Schritt aufweist, bei welchem der Ring (5) in der korrekten Axial - und Winkelmontagestellung auf dem Spindelbereich (201), die sich ergibt, in gegenseitigen Zusammenwirken des Mehrfachnockenprofiles (10) und der Mehrfachnockenform (100) beispielsweise durch die Aufbringung von Klebstoff an irgendeinem Teil der Kontaktflächen des Ringes (5) und der Spindel (1) verriegelt wird.

3. Verfahren nach Anspruch 1, **dadurch gekennzeichnet, dass** für die Herstellung von Radnabenfahrzeugen, die mit wenigstens zwei Kranzteilen aus Wälzelementen (2,102) versehen sind, die entlang Bahnen (4,104) laufen, die an zugehörigen Ringen, (5,105) ausgebildet sind, die mit einem hohen Grad an Genauigkeit an einem Endbereich (201) der Spindel montiert sind, an welcher die Ringe in Abfolge montiert und axial mittels einer Anlage des inneren Rings (5) gegen ein Absatz (6) der Spindel und mittels einer Anlage des äußeren Ringes (105) an einer Seite gegen den inneren Ring (5) und auf der anderen Seite gegen eine umgerollte Endkante (201') der Spindel axial verriegelt sind, der innere Ring (5) und der Absatz (6) so ausgestaltet sind, dass sie mit einer Anordnung in Eingriff stehende Mehrfachnocken (10,100) ineinandergreifen, während weitere Bearbeitungsbereiche (10') mit Mehrfachnocken an der hinteren Kante des inneren Rings (5) und weitere Bearbeitungsbereiche (100') mit Mehrfachnocken an der inneren Kante des Außenrings (105) vorgesehen sind, um ein gegenseitiges Ineinandergreifen zwischen den beiden Ringen vorzusehen, so dass der innere Ring (5) unmittelbar auf der Spindel (1) verriegelt ist und der äußere Ring (105) an dem inneren Ring (5) und damit über den letzteren auch an der Spindel (1) verriegelt ist.

4. Fahrzeugradnabe, die mit wenigstens zwei Kranzteilen aus Wälzelementen (2,102) versehen ist, von denen wenigstens einer entlang einer ringförmigen Bahn (104) läuft, die an einem Ring (5) ausgebildet ist, der mit einem hohen Grad an Genauigkeit an einem Endbereich (201) der Spindel montiert ist, an welcher der gleiche Ring axial mittels einer Anlage gegen einen inneren Absatz (6) der Spindel und mittels einer Anlage gegen eine umgerollte Endkante (201') der Spindel axial verriegelt ist, **dadurch gekennzeichnet, dass** der Absatz (6) auf Maschinenwerkzeugen derart bearbeitet ist, das er eine Mehrfachnockenform (10) annimmt, die Teile besitzt, die relativ zu der äußeren Seitenfläche des Spindelbereiches (201), auf welchem der Ring (5) montiert werden muss, erhöht sind und der perfekt zu einer entsprechenden Mehrfachnockenform (100) passt, die an der Kante und / oder dem Ende des Ringes (5) ausgebildet ist, der dazu vorgesehen ist, sich gegen den Absatz (6) anzulegen, um so die Ausbildung der mit Nocken verriegelnden Profile zu vereinfachen und die Montage des Rings auf der Spindel zu vereinfachen, wobei die Mehrfachnockenform (100) Teile aufweist, die relativ zu der inneren Seitenfläche des Ringes (5) vertieft sind, um Führungsmittel zu bilden, die den axialen Eingriff der Teile (5,201) erleichtern.

5. Radnabe nach Anspruch 4, **dadurch gekennzeichnet, dass** dann, wenn beide Kranzteile aus Wälzelementen (2,102) entlang den jeweiligen Bahnen (4,104) von zugehörigen Ringen (5,105) laufen, die mit einem hohen Grad an Genauigkeit und in aufeinanderfolgender Weise an einem Endbereich (201) der Spindel montiert sind, an welchem die Ringe axial mittels einer Anlage des inneren Rings (5) gegen einen Absatz (6) dieser Spindel und mittels einer Anlage des äußeren Rings (105) an einer Seite gegen den inneren Ring (5) und auf der anderen Seite gegen eine umgerollte Endkante (201') der gleichen Spindel axial verriegelt sind, der innere Ring (5) und der Absatz (6) so ausgestaltet sind, das sie miteinander mit einer Eingriffsanordnung aus Mehrfachnocken (10,100) verriegelt sind, während weitere Bearbeitungsbereiche (10') mit Mehrfachnocken an der hinteren Kante des inneren Rings (5) und weitere Bearbeitungsbereiche (100') mit Mehrfachnocken an der inneren Kante des äußeren Rings (105) vorgesehen sind, um ein gegenseitiges Verriegeln zwischen den beiden Ringen vorzusehen, so dass der innere Ring (5) unmittelbar auf der Spindel (1) und der äußere Ring (105) auf dem inneren Ring (5) und damit über den letzteren auch auf der Spindel (1) verriegelt ist.

6. Radnabe nach einem der vorhergehenden Ansprüche, bei welcher das Mehrfachnockenprofil oder die Mehrfachnockenform ein Dreinockenprofil oder eine Dreinockenform ist.

## Revendications

1. Procédé pour produire des moyeux de roue de véhicule dotés d'au moins deux parties bombées de moyens de roulement (2, 102), dont au moins une (102) se déplace le long d'une voie annulaire (104) en forme d'anneau (5) monté avec un degré élevé de précision sur une partie d'extrémité (201) de la broche (1), sur laquelle le même anneau est axialement verrouillé en butant, d'un côté, contre un épaulement (6) et de l'autre côté, contre une arête d'extrémité laminée (201') de la même broche, **caractérisé par** la série des étapes de fonctionnement suivantes :
- formage avec les machines-outils de tournage de la broche (1) sur la surface frontale dudit épaulement (6), d'un profilé à lobes multiples (10) qui présente des parties relevées par rapport à la surface latérale extérieure de la partie de broche (201) dotée du même épaulement (6) et sur lequel ledit anneau (5) doit être monté ;
- formage avec les machines-outils de tournage dudit anneau (5) sur l'arête et/ou sur l'extrémité de cet anneau qui est destinée à coagir avec ledit épaulement (6), d'une zone usinée avec une forme à lobes multiples (100) qui complète et peut s'accoupler avec la zone usinée formée sur ledit épaulement (6) et qui présente des parties évidées par rapport à la surface latérale intérieure de l'anneau (5) et qui peut agir comme moyens de guidage pendant l'étape suivante, c'est-à-dire :
- montage axial de l'anneau (5) sur la partie de broche (201) qu'il doit supporter, de telle manière que ledit anneau bute contre ledit épaulement (6) ;
- réalisation d'une brève rotation relative de la broche (1) et de l'anneau (5) de sorte à réaliser l'engagement entre ledit profilé à lobes multiples (10) et la forme à lobes multiples (100), suite à quoi l'anneau s'engage avec la broche en occupant l'espace longitudinal approprié et cesse d'être axialement déplacé sur ladite broche ;
- laminage de la partie de broche (201) dépassant dudit anneau (5) pour la formation d'une arête laminée (201') qui verrouille axialement ledit anneau (5) sur la broche porteuse (1).

2. Procédé selon la revendication 1, **caractérisé en ce qu'**il comprend avant ladite dernière étape de laminage, une étape, dans laquelle l'anneau (5) est verrouillé dans la position de montage axiale et angulaire correcte sur la partie de broche (201), résultant en une coopération mutuelle dudit profilé à lobes multiples (10) et de la forme à lobes multiples (100), par exemple avec l'application d'un adhésif dans toute partie des surfaces de contact de l'anneau (5) et de la broche (1).

3. Procédé selon la revendication 1, **caractérisé en ce que** pour la production de moyeux de roue pour véhicules dotés d'au moins deux parties bombées de moyens de roulement (2, 102) qui se déplacent le long de voies (4, 104) formées sur des anneaux respectifs (5, 105) montés avec un degré élevé de précision sur une partie d'extrémité (201) de la broche, sur laquelle lesdits anneaux sont montés en série et sont axialement verrouillés par la butée de l'anneau intérieur (5) contre un épaulement (6) de ladite broche et par la butée de l'anneau extérieur (105) d'un côté contre ledit anneau intérieur (5) et de l'autre côté contre une arête d'extrémité laminée (201') de ladite broche, l'anneau intérieur (5) et l'épaulement (6) sont conçus de sorte à être clavetés ensemble avec un dit ensemble engagé à lobes multiples (10, 100), alors que d'autres zones usinées à lobes multiples (10') sont prévues sur l'arête arrière dudit anneau intérieur (5) et d'autres zones usinées à lobes multiples (100') sont prévues sur l'arête intérieure de l'anneau extérieur (105) dans le but de fournir un clavetage mutuel entre les deux anneaux de sorte que l'anneau intérieur (5) soit claveté directement sur la broche (1) et l'anneau extérieur (105) soit claveté sur l'anneau intérieur (5) et par conséquent, via ce dernier, aussi sur la broche (1).

4. Moyeu de roue de véhicule doté d'au moins deux parties bombées de moyens de roulement (2, 102), dont au moins une se déplace le long d'une voie annulaire (104) en forme d'anneau (5) monté avec un degré élevé de précision sur une partie d'extrémité (201) de la broche (1), sur laquelle le même anneau est axialement verrouillé en butant contre un épaulement intérieur (6) de ladite broche et en butant contre une arête d'extrémité laminée (201') de ladite broche, **caractérisé en ce que** ledit épaulement (6) est usiné sur des machines-outils de sorte à prendre une forme à lobes multiples (10) qui présente des parties relevées par rapport à la surface latérale extérieure de la partie de broche (201), sur laquelle ledit anneau (5) doit être monté et qui s'accouple parfaitement avec une forme à lobes multiples (100) correspondante formée sur l'arête et/ou sur l'extrémité dudit anneau (5) destinée à reposer contre ledit épaulement (6) de sorte à simplifier la formation desdits profilés de clavetage de lobe et à simplifier le montage de l'anneau sur la broche, cette forme profilée à lobes multiples (100) présentant des parties évidées par rapport à la surface latérale intérieure dudit anneau (5) de sorte à former des moyens de guidage facilitant l'engagement axial desdites parties (5, 201).

5. Moyeu de roue selon la revendication 4, **caractérisé en ce que** si les deux parties bombées des moyens de roulement (2, 102) se déplacent le long des voies respectives (4, 104) des anneaux respectifs (5, 105) montés avec un degré élevé de précision et en série sur une partie d'extrémité (201) de la broche, sur laquelle lesdits anneaux sont axialement verrouillés par la butée de l'anneau intérieur (5) contre un épaulement (6) de la même broche et par la butée de l'anneau extérieur (105) d'un côté contre ledit anneau intérieur (5) et de l'autre côté contre une arête d'extrémité laminée (201') de la même broche, l'anneau intérieur (5) et l'épaulement (6) sont conçus de sorte à être clavetés conjointement avec un dit ensemble engagé à lobes multiples (10, 100), alors que d'autres zones usinées à lobes multiples (10') sont prévues sur l'arête arrière dudit anneau intérieur (5) et d'autres zones usinées à lobes multiples (100') sont prévues sur l'arête intérieure de l'anneau extérieur (105) dans le but de fournir un clavetage mutuel entre les deux anneaux de sorte que l'anneau intérieur (5) soit claveté directement sur la broche (1) et l'anneau extérieur (105) soit claveté sur l'anneau intérieur (5) et par conséquent, via ce dernier, aussi sur la broche (1).

6. Moyeu de roue selon l'une quelconque des revendications précédentes, dans lequel le profilé ou la forme à lobes multiples est un profilé ou une forme à trois lobes.
